# EUROPEAN PATENT SPECIFICATION

(11) **EP 1 384 637 B1**
(45) Date of publication and mention of the grant of the patent: **29.06.2005**
(21) Application number: 03015929.7
(22) Date of filing: 12.07.2003
(51) Int. Cl.: B60T 8/36

(54) **Valve control device for controlling a valve for a pressure fluid**
Ventilsteuergerät für das Steuern eines Ventils für ein Fluidum unter Druck
Dispositif de controle d'une soupape pour fluide sous pression

(30) Priority: 22.07.2002 EP 02016199
(43) Date of publication of application: 28.01.2004
(73) Proprietor: Tyco Electronics Belgium EC N.V., 8020 Oostkamp (BE)
(72) Inventor: Kerckhof, Bart, 8210 Zedelgem (BE); Van Cauwenberge, Jan, 9880 Aalter (BE)
(74) Representative: Patentanwaltskanzlei WILHELM & BECK

(56) References cited:
- DE-A- 10 036 086
- DE-A- 19 518 519
- US-A- 5 829 122
- US-A- 5 944 047
- US-A- 5 977 852
- US-B1- 6 344 783

## Description

The invention relates to a valve control device for controlling a valve for a pressure fluid, including a cylindrical coil with a longitudinal axis and a coil body, on which the coil is arranged. The coil body comprises an inner hole, which is arranged along the longitudinal axis of the coil. The coil and the coil body are arranged within a housing with an outer yoke sleeve, a yoke ring bottom and an inner yoke sleeve. The outer yoke sleeve surrounds the coil. The inner yoke sleeve is arranged within the hole and the yoke ring bottom connects the inner and the outer yoke sleeve.

Such valve control devices are used for example as an electronic control unit for an anti-locking system (ABS) in a motor vehicle, in which break fluid actuating wheel breaks is controlled with one or two valves per wheel. Each of the valves are actuated by a respective valve control device.

Document US-A-5,944,047 discloses a valve control device according to the preamble of claim 1.

US 5,977,852 describes a valve control device for controlling a valve for a pressure fluid including a cylindrical coil having a longitudinal extent defining a longitudinal axis, an end surface, a coil body with a terminal pin carrier disposed on the end surface, and a coil wire wound onto the coil body. Coil terminal pins are oriented cross-wise to the longitudinal axis of the coil. The coil terminal pins are secured to the terminal pin carrier and conductively connected to the coil wire. A yoke ring housing includes a yoke ring sheath surrounding the longitudinal extent of the coil and having a longitudinal extent. The yoke ring sheath comprises an outer sleeve and an inner sleeve which are connected over a yoke ring bottom. The outer sleeve covers the hole extent of the cylindrical coil. The inner yoke sleeve extents along a part of the longitudinal axis of the coil. The inner yoke sleeve is used for guiding the magnetic flux and is also used for guiding an armature which is connected with a closing member of a value. Therefore the inner yoke sleeve has to show at least a predetermined wall thickness. It is therefore relatively expensive to produce the housing because the housing has to be turned on a lathe.

DE 19518519 C2 describes a valve control device which comprises a spring element which is connected at one end with a coil body and at the other end with a terminal pin carrier. The terminal pin carrier is fixed to a housing. The spring element provides the function that the coil body is movable for receiving a valve block in a receiving hole of the coil body. The spring element is directed above the coil and along the longitudinal axis of the cylindrical coil. Therefore the extent of the valve control device is relatively long.

### Summary of the invention

It is accordingly an object of the invention to provide a valve control device for controlling a valve for a pressure fluid, which overcomes the disadvantages of the state of art.

With the foregoing and other objects in view, a valve control device for controlling a valve for a pressure fluid is provided in accordance with the invention, comprising a cylindrical coil having a longitudinal axis, a coil body, on which the coil is arranged. The coil body is arranged within a housing with an outer yoke sleeve, a yoke ring bottom and an inner yoke sleeve. In contrast to the state of art a second sleeve is provided which is arranged within the inner yoke sleeve and fixed with the inner yoke sleeve and the inner yoke sleeve is produced by a deep drawing process.

Providing two sleeves which are arranged in the inner hole of the coil body has the advantage that the inner yoke sleeve can be made with a thin wall thickness. Therefore the process of deep drawing could be used for producing the housing of the coil. The deep drawing process has the advantage that the production of the housing is cheaper. The necessary thickness is attained by using a second sleeve which could also be produced by a deep drawing process. However, the second sleeve could also be produced by other processes. The two sleeves provide a wall with the necessary thickness for guiding the magnetic flux and the necessary mechanical stiffness.

Additionally, in a preferred embodiment of the invention the valve control device comprises a housing with a cover plate with a top sleeve which is arranged within the inner hole of the coil body and arranged at an opposite end of the cylindrical coil. Within the top sleeve a further sleeve is arranged which is fixed to the top sleeve. The top sleeve is formed by a deep drawing process. Using two sleeves has the advantage that the necessary wall thickness for a guiding sleeve within the coil body is achieved by using two sleeves which can be produced by a deep drawing process because of their thin wall thickness. Using the deep drawing process has the advantage that producing the cover plate with the top sleeve is cheaper than using a turning process on a lathe.

With the foregoing and other objects in view, a further preferred embodiment of a valve control device for controlling a valve for a pressure fluid is provided in accordance with the invention, comprising a terminal pin carrier, at which terminal pins of the coil are secured. The terminal pin carrier is connected with a spring element to the coil body. The spring element is arranged in a vertical direction to the longitudinal axis of the coil. This has the advantage that the longitudinal extent of the valve control device is reduced. Furthermore contacts for contacting the terminal pins could be arranged beside the valve control device. Therefore there is a greater flexibility for arranging several valve control devices on a printed circuit board.

In a preferred embodiment of the invention the spring element comprises two arms, which are arranged at the same level and arranged at opposite sides of the coil body. The two arms are fixed with the terminal pin carrier at two opposite sides. Furthermore each arm shows the shape of an "s". This embodiment of the spring element shows the advantage that the terminal pin carrier is strongly fixed with the coil body and nevertheless movable in a plane which is arranged vertical to the longitudinal axis of the coil. This has the advantage that the coil can be moved for receiving a valve dome. The valve dome comprises a closing member of a valve. Usually there are several valve domes which are arranged on a valve block. The air gap between the inner yoke sleeve and the valve dome should neither be too great nor too small. As a result, the coils are flexibly fixed with a plate. The fixing between the plate and the coil is attained by the terminal pin carrier and the terminal pins which are electrically and mechanically connected to connections of a printed circuit board on one side and flexibly connected by the spring element with the coil body on the other side.

In a preferred embodiment of the invention the arms of the spring element comprise a first part, which is in the shape of an arc, whereby the arc is directed from an outer side of the coil in direction of the terminal pin carrier to the middle of the coil body. The first part is connected with the terminal pin carrier over an U-shaped second part. The second part comprises a shorter leg which is connected with the first part and a longer leg which is connected with the terminal pin carrier. This shape has the necessary stiffness and the necessary flexibility for the terminal pin carrier.

The construction and method of operation of the invention, however, together with additional objects and advantageous embodiments thereof will be best understood from the following description of the specific embodiments when read in connection with the accompanying drawings.

### Brief description of the drawings

Fig. 1 shows an explosive view of a valve control device;
Fig. 2 depicts different views of the valve control device;
Fig. 3 shows an schematic drawing of the housing with an outer and an inner yoke sleeve and a second sleeve;
Fig. 4 shows in greater detail the coil body with the spring element and the terminal pin carrier; and
Fig. 5 shows in greater detail the valve control device with the terminal pin carrier.

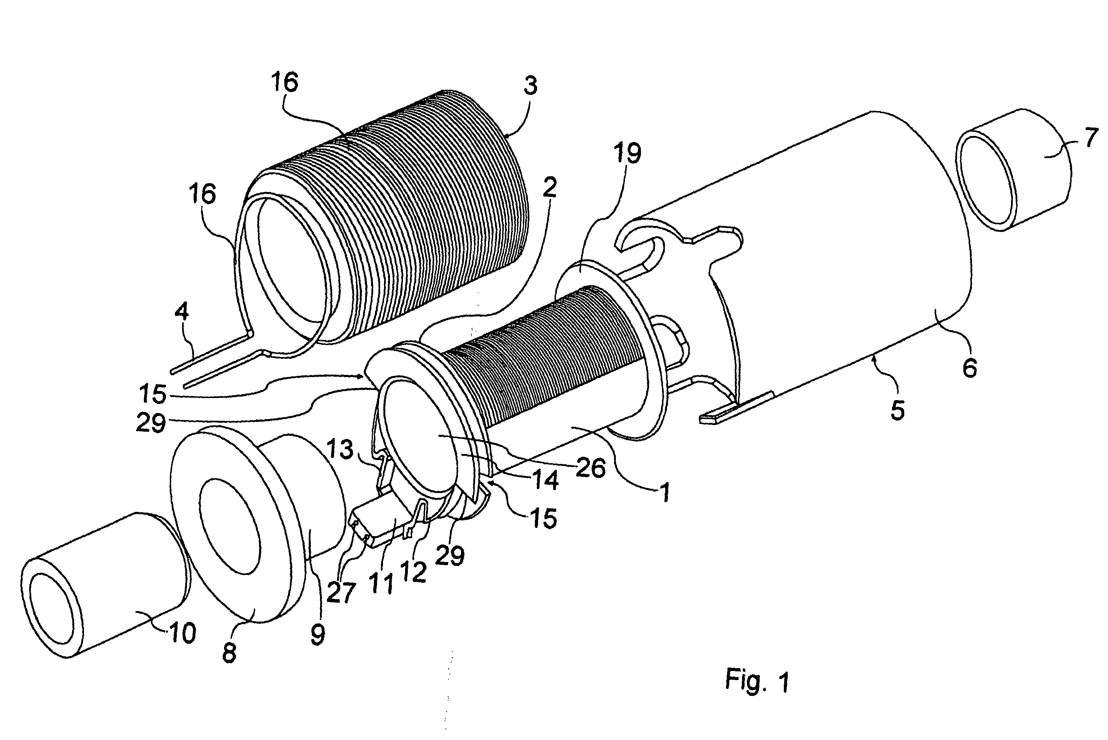

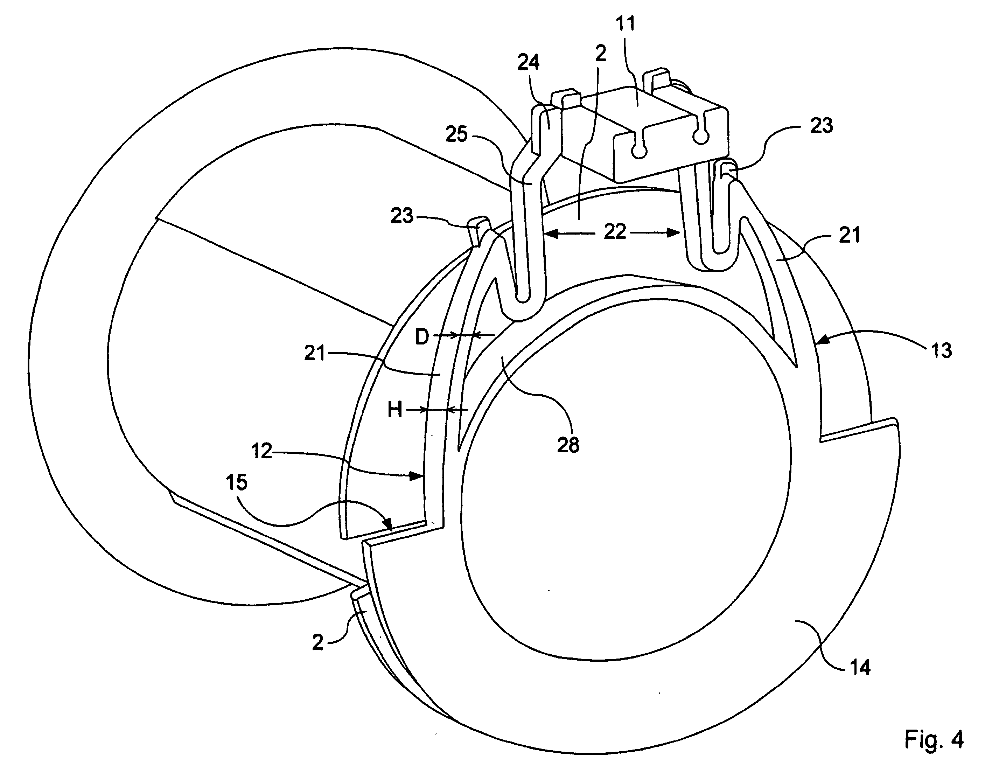

Fig. 1 shows in an explosive view a valve control device with a coil body 1 on which a coil 3 is arranged in an assembled position. The coil body 1 has the shape of a cylinder with a top border 2 and a bottom border 19 at two opposite ends. Between the top border 2 and the bottom border 19 the coil 3 is arranged. The coil body 1 comprises a central hole 26. The coil body 1 and the coil 3 are inserted in a housing 5 which comprises an outer yoke sleeve 6, a yoke ring bottom 17 and an inner yoke sleeve 18 (Fig. 3).

The top border 2 comprises at opposite sides of the longitudinal extent of the coil body 1 two cutouts 15. The cylindrical part of the coil body 1 extends over the top border 2 to a part ring border 14. The part ring border 14 shows the shape of a half circle. Beside two edges 29 of the part ring border 14 two arms of a spring element emerge from the coil body 1. The two arms 12, 13 are arranged in a vertical plane to the longitudinal axis of the coil body 1. In a general view, each arm 12, 13 comprises an S-shape. A first ending of each arm 12, 13 is connected with the coil body 1 and a second ending of each arm 12, 13 is connected at opposite sides with a terminal pin carrier 11.

The coil 3 comprises a coil wire 16 which is wound around the coil body 1. Two endings of the coil wire 16 are connected to terminal pins 4. The terminal pin carrier 11 comprises two recesses 27 for receiving and holding the terminal pins 4.

The central hole 26 of the coil body 1 shows a cylindrical shape with a diameter which is greater than the outer diameter of a top sleeve 9 which is connected with a cover plate 8. The cover plate 8 shows the shape of a circular plane with a hole in the center. The hole is defined by the inner wall of the top sleeve 9. Within the top sleeve 9 a further sleeve 10 is arranged, which is fixed to the top sleeve 9. The thickness of the wall of the top sleeve 9 and the wall of the further sleeve are small, so the top sleeve 9 and the further sleeve 10 can be produced by a deep drawing process.

The bottom 17 of the housing 5 also comprises a hole which is defined by an inner yoke sleeve 18 (Fig. 3). Within the inner yoke sleeve 18 a second sleeve 7 is arranged which is fixed with the inner yoke sleeve 18. The inner yoke sleeve 18 shows a small wall thickness, so the inner yoke sleeve 18 can be produced by a deep drawing process. Therefore the housing 5 can be produced by a deep drawing process. Consequently, the production of the housing 5 is cheaper.

In the state of art the housing 5 comprises only an inner yoke sleeve which has a greater wall thickness than the inner yoke sleeve 18 of the invention. For guiding a valve dome within the hole 26 of the coil body 1 it is necessary that the wall of the sleeve has a greater thickness than can be achieved by producing the sleeve by a deep drawing process. The necessary thickness of the wall is attained by providing two sleeves. The necessary thickness of the wall of the sleeves within the coil body 1 is necessary for guiding the magnetic flux and for guiding the valve dome. The valve dome is guided in the preferred embodiment as shown in Fig. 1 at a bottom side by the second sleeve 7 and at a top side by the further sleeve 10.

In a simple embodiment of the invention, a double sleeve for guiding the magnetic flux and for guiding the valve dome is located only at one end of the coil body.

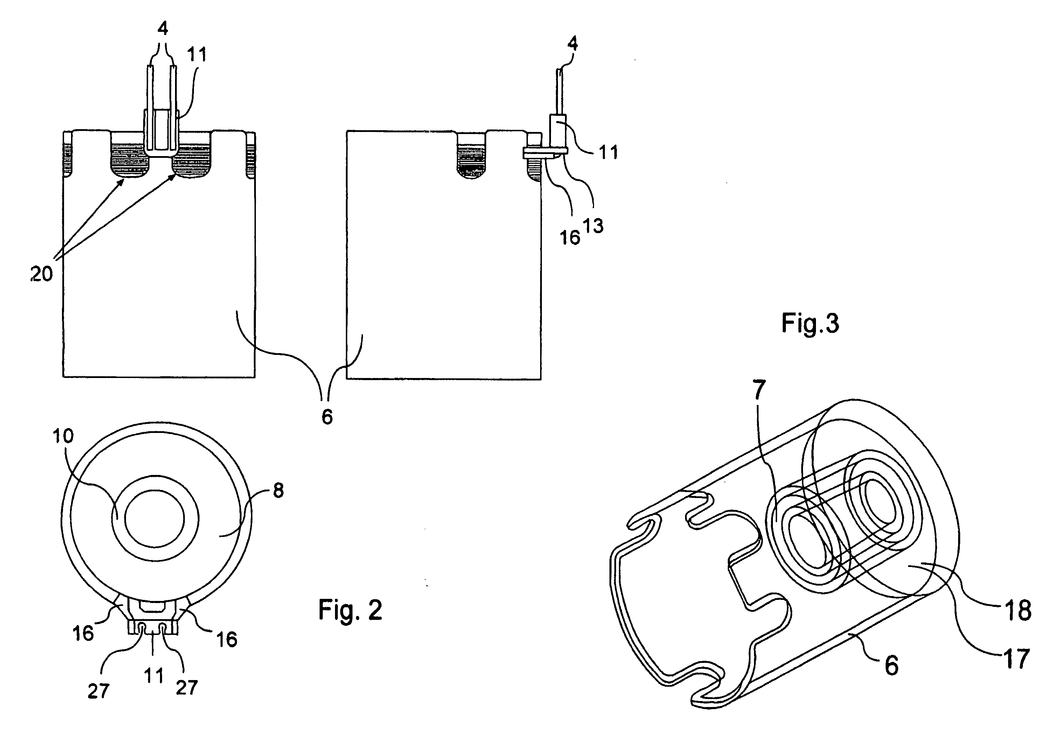

Fig. 2 shows from different points of view the valve control device with the housing 5 and the terminal pin carrier 11. As it can be seen from Fig. 2 the terminal pins 4 are put in the recesses 27 of the terminal pin carrier 11. The cover plate 8 is put into the outer yoke sleeve 6 closing the housing 5. The outer yoke sleeve 6 comprises two further cutouts 20 at an upper edge of the outer yoke sleeve 6. The two further cutouts 20 are used for guiding the coil wire 16 to the terminal pin carrier 11 in a vertical direction to the longitudinal axis of the coil body 1. The terminal pin carrier 11 is fixed by the spring element comprising a first and a second spring arm 12, 13. As can be seen in Fig. 2, the terminal pin carrier 11 is arranged beside the housing 5 and extends only minimally over the cover plate 8. Therefore the longitudinal extent of the valve control device is relatively short. Furthermore it is possible to provide contacts on a printed circuit board (pcb) for contacting the terminal pins 4 beside the housing 5. This feature has the advantage that several contacts for contacting several coils 3 can be arranged within a small area. It is therefore not necessary to provide electrical contacts over a large area of the pcb. Therefore conducting lines can be saved.

Fig. 3 shows in a perspective view the housing 5 with the outer yoke sleeve 6, which is connected over the yoke ring bottom 17 with the inner yoke sleeve 18. Within the inner yoke sleeve 18 the second sleeve 7 is fixed. One method for fixing the second sleeve 7 with the inner yoke sleeve 18 is the use of a press-fit connection. Also the further sleeve 10 could be fixed with the top sleeve 9 by using a press-fit connection. The pairs of sleeves could also be fixed together by soldering or welding.

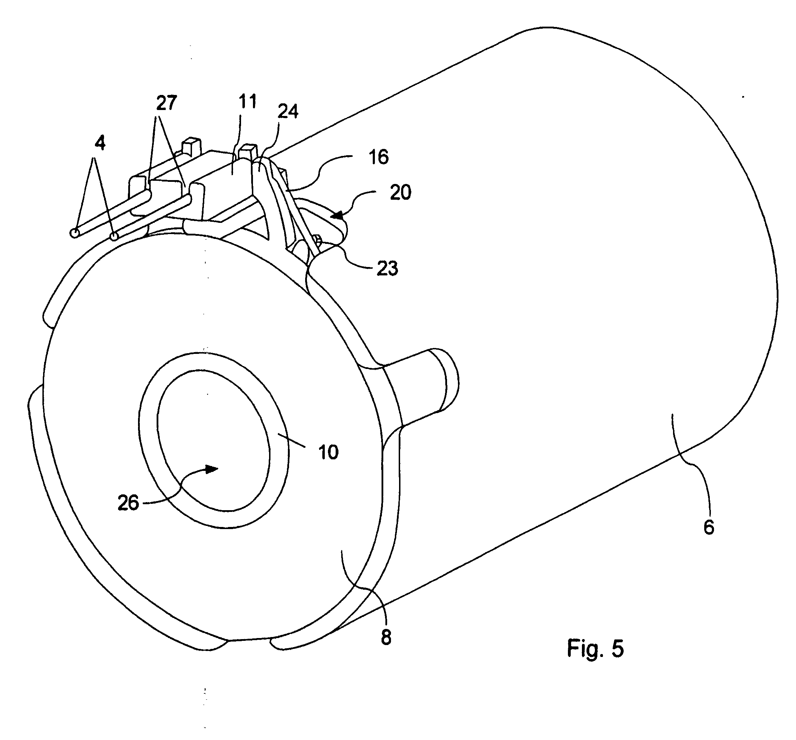

Fig. 4 shows the coil body 1 which comprises a basic cylinder with a top border 2 at one end and a bottom border 19 at the other end of the cylinder. The cylinder extends the top border 2 with a circular ring 28. At the edge of the circular ring 28, the part ring border 14 is arranged which is oriented in parallel to the top border 2. As can be clearly seen in Fig. 4, the part ring border 14 shows a shape of a half circular ring. Near the ends of the part ring border 14 the first and the second spring arm 12, 13 emerge from the circular ring 28. The first and the second spring arm 12, 13 have a mirror-inverted position to each other. The shape of the first and the second spring arm 12, 13 is identical and will be explained by the first spring arm 12.

The first spring arm 12 comprises a first part 21 which is with one end connected to the circular ring 28 and shows the shape of an arc which is slightly directed to the middle of the coil body and away from the coil body in a vertical direction to the longitudinal axis of the coil body 1. A second end of the first part 21 is connected with a second part 22. The second part 22 shows the shape of a U-form with a shorter and a longer leg. The shorter leg is connected to the first part 21 and the longer leg is connected to a connection bending 25 which is directly connected to the terminal pin carrier 11. The bending of the U-form is directed to the coil body 1. At a connection point between the first and the second part there is provided a first holding plate 23 which emerges from the first spring arm 12 and is directed away from the coil body 1. The first holding plate 23 is arranged at the outer and a lower side of the first part 21. The thickness of the first holding plate is smaller than the height of the first part 21. Nearby the terminal pin carrier 11 a second holding plate 24 is provided which is arranged at the connection bending 25. The second holding plate 24 is arranged at an outer and upper side of the connection bending 25 and is directed away from the coil body 1. The thickness of the second holding plate 24 is smaller than the height of the bending 25.

Therefore there is a guiding face at the outer side of the connection bending 25 below the second holding plate 24. Respectively there is also a guiding face at the outer side of the first part 21 above the first holding plate 23. The terminal pin carrier 11 comprises recesses 27 for receiving and holding the terminal pins 4.

In a preferred embodiment of the invention with the cylinder, the top border 2 and the bottom border 19, the circular ring 28, the part ring border 14 and the spring element with the first and the second spring arms 12, 13 and the terminal pin carrier 11 are produced as one piece. A typical material for producing the coil body 1 is plastic. As can be seen in Fig. 4 the height H is greater than the thickness D of the first and the second spring arm 12, 13. The two endings of the coil wire 16 are guided from the region between the top and the bottom border 2, 19 through the opening 15 of the top border 2 in direction to the terminal pin carrier 11. Thereby the coil wire 16 is guided above the first holding plate 23 and below the second holding plate 24 along outer faces of the first or second spring arm to a lower end of the recesses 27. In this region the two endings of the coil wire 16 are electrically connected with the terminal pins 4. The terminal pins 4 stick in the recesses 27 and their endings are directed in a parallel axis to the longitudinal axis of the coil body 1 above the part ring border 14. The part ring border 14 is used as a stop shoulder for the cover plate 8 which lies upon the part ring border 14 in the assembled position. The bottom border 19 of the coil body 1 lies in the assembled position upon an upper surface of the yoke bottom ring 17.

Fig. 5 shows in a perspective view the valve control device with the terminal pin carrier 11, which is held by the first and the second spring arm 12, 13. As can be seen in Fig. 5, the endings of the wires 16 are guided through the further cutouts 20 along an outer face of the first part 21 of the first or the second spring arm 12, 13. The coil wire 16 is arranged above the holding plate 23 and below the second holding plate 24 until a lower edge of the terminal pin carrier 11. The terminal pins 4 are fixed in the recesses 27 and directed in parallel to the longitudinal axis of the coil body 1 in a direction above the cover plate 8.

The terminal pins 4 are fixable with connections of a printed circuit board. The valve control device is flexibly fixed by the terminal pins 4 on the printed circuit board. The first and the second spring arms 12, 13 allow a movement of the terminal pin carrier 11 in direction of the coil body 1 and in direction of a circular line around the coil body 1. Furthermore the terminal pin carrier 11 is also movable in parallel to the longitudinal axis of the coil body 1.

The housing 5 is for example made of a metal plate, which is deep drawn to attain the cylindrical shape of the housing 5 with the outer and the inner yoke sleeve 6, 18.

### Reference list

- 1: coil body
- 2: top border
- 3: coil
- 4: terminal pin
- 5: housing
- 6: outer yoke sleeve
- 7: second sleeve
- 8: cover plate
- 9: top sleeve
- 10: further sleeve
- 11: terminal pin carrier
- 12: first spring arm
- 13: second spring arm
- 14: part ring border
- 15: cutout
- 16: coil wire
- 17: bottom
- 18: inner yoke sleeve
- 19: bottom border
- 20: further cutout
- 21: first part
- 22: second part
- 23: holding plate
- 24: second holding plate
- 25: connection bending
- 26: central hole
- 27: recess
- 28: circular ring
- 29: edge

## Claims

1. Valve control device for controlling a valve for a pressure fluid, comprising:
a cylindrical coil having a longitudinal axis,
a coil body, on which the coil is arranged,
wherein the coil body comprises a central hole, which is arranged along the longitudinal axis of the coil,
a housing with an outer yoke sleeve, a yoke ring bottom and an inner yoke sleeve,
wherein the outer yoke sleeve surrounds the coil,
the inner yoke sleeve is arranged within the hole and the yoke ring bottom connects the inner and the outer yoke sleeve,
**characterised in**
**that** a second sleeve (7) is arranged within the inner yoke sleeve (18) and fixed to the inner yoke sleeve (18) and that the inner yoke sleeve (18) is formed by a deep drawing process.

2. Valve control device according to claim 1, **characterised in that** the second sleeve (7) is produced by a deep drawing process.

3. Valve control device according to claim 1 or 2, **characterised in that** the housing (5) comprises a cover plate (8) with a top sleeve (9) being arranged opposite to the yoke ring bottom (17), that the top sleeve (9) is arranged within the hole (26) of the coil body (1),
that a further sleeve (10) is arranged within the top sleeve (9) and fixed to the top sleeve (9), and that the cover plate (8) with the top sleeve (9) is made by a deep drawing process.

4. Valve control device according to claim 3, **characterised in that** the further sleeve (10) is made by a deep drawing process.

5. Valve control device according to claim 1, comprising:
a terminal pin carrier (11),
coil terminal pins that are secured to said pin carrier and
conductively connected to the coil (3),
whereby the terminal pin carrier (11) is connected by a spring element (12, 13) to the coil body (1), whereby
the spring element (12, 13) is arranged perpendicularly to the longitudinal axis of the coil (3);
the housing (5) comprises cutouts (20) through that the spring element (12, 13) extends and that the terminal pin carrier (11) is at least partly arranged beside the housing (5).

6. Valve control device according to claim 5, **characterised in that** the spring element (12, 13) comprises two arms (12, 13),
that the two arms (12, 13) are arranged on the same plane, that first endings of the two arms (12, 13) are fixed to opposite sides of the coil body (1),
that second endings of the two arms (12, 13) are fixed to opposite sides of the terminal pin carrier (11).

7. Valve control device according to claim 6, **characterised in that** each arm (12, 13) shows an S-shape.

8. Valve control device according to claim 7, **characterised in that** each arm (12, 13) comprises a first part (21), which has the shape of an arc, that the arc emerges from an outer face of the coil body (1) tangential to the longitudinal axis of the coil body (1), that the arc is slightly bent towards the coil body (1) and the other spring arm (13, 12), that the arc is connected with the terminal pin carrier (11) by an U-shaped second part (22), wherein a shorter leg of the second part (22) is connected to the first part (21) and a longer leg is connected to the terminal pin carrier (11).

9. Valve control device according to any of the claims 5 to 8, **characterised in that** the spring arms (12, 13) are mirror inverted arranged to each other.

10. Valve control device according to any of the claim 5 to 9, **characterised in that** the spring arms (12, 13) are formed as one piece with the coil body (1) and that the coil body comprises a part ring border (14) located opposite to the terminal pin carrier (11), that the part ring border (14) comprise an upper face for supporting the cover plate (8), that the upper face of the part ring border (14) is arranged at a higher level than an upper face of the first and second arms (12, 13).

11. Valve control device according to any of the claims 5 to 10, **characterised in that** the spring arms (12, 13) is arranged in parallel to the longitudinal axis of the coil, that the height is greater than a thickness of the arms (12, 13) which is oriented vertical to the longitudinal axis of the coil (3).

## Patentansprüche

1. Ventilsteuerungsgerät zur Steuerung eines Ventils für ein mit Druck beaufschlagtes Fluid, welches aufweist:
eine zylindrische Spule mit einer Längsachse,
einen Spulenkörper, auf dem die Spulenwicklung angebracht ist,
wobei der Spulenkörper eine Mittenöffnung aufweist, die sich entlang der Längsachse der Spulenwicklung erstreckt,
ein Gehäuse mit einer äußeren Aufsatzbuchse, einem ringförmigen Glockenboden und einer inneren Aufsatzbuchse, wobei die äußere Aufsatzbuchse die Spule umgibt, die innere Aufsatzbuchse innerhalb der Öffnung angeordnet ist, und der ringförmige Glockenboden die innere und die äußere Aufsatzbuchse verbindet,
**dadurch gekennzeichnet,**
**dass** eine zweite Buchse (7) innerhalb der inneren Aufsatzbuchse (18) angeordnet und an der inneren Aufsatzbuchse (18) befestigt ist und dass die innere Aufsatzbuchse (18) mit Hilfe eines Tiefziehverfahrens geformt wird.

2. Ventilsteuerungsgerät gemäß Anspruch 1, **dadurch gekennzeichnet, dass** die zweite Buchse (7) mit Hilfe eines Tiefziehverfahrens hergestellt wird.

3. Ventilsteuerungsgerät gemäß Anspruch 1 oder 2, **dadurch gekennzeichnet, dass** das Gehäuse (5) eine Deckplatte (8) mit einer oberen Buchse (9) enthält, die gegenüber von dem ringförmigen Glockenboden (17) angeordnet ist,
dass die obere Buchse (9) innerhalb der Öffnung (26) des Spulenkörpers (1) angeordnet ist,
dass eine weitere Buchse (10) innerhalb der oberen Buchse (9) angeordnet und an der oberen Buchse (9) befestigt ist, und dass die Deckplatte (8) mit der oberen Buchse (9) mit Hilfe eines Tiefziehverfahrens hergestellt wird.

4. Ventilsteuerungsgerät gemäß Anspruch 3, **dadurch gekennzeichnet, dass** die zusätzliche Buchse (10) mit Hilfe eines Tiefziehverfahrens hergestellt wird.

5. Ventilsteuerungsgerät gemäß Anspruch 1, welches aufweist:
ein Steckerstifteträger (11), Spulensteckerstifte, die an besagtem Stifteträger gesichert und mit der Spulenwicklung (3) leitend verbunden sind,
wobei der Steckerstifteträger (11) mit Hilfe eines Federelementes (12, 13) am Spulenkörper (1) befestigt ist, wobei das Federelement (12, 13) im rechten Winkel zur Längsachse der Spulenwicklung (3) angeordnet ist;
das Gehäuse (5) mit Aussparungen (20) ausgestattet ist, durch welche sich das Federelement (12, 13) erstreckt und bei dem der Steckerstifteträger (11) mindestens teilweise neben dem Gehäuse (5) angeordnet ist.

6. Ventilsteuerungsgerät gemäß Anspruch 5, **dadurch gekennzeichnet, dass** das Federelement (12, 13) zwei Bügel umfasst, dass die zwei Bügel (12, 13) in gleicher Ebene angeordnet sind, dass die ersten Enden der beiden Bügel (12, 13) an gegenüberliegenden Seiten des Spulenkörpers (1) befestigt sind,
dass die zweiten Enden der beiden Bügel (12, 13) an gegenüberliegenden Seiten des Steckerstifteträgers (11) befestigt sind.

7. Ventilsteuerungsgerät gemäß Anspruch 6, **dadurch gekennzeichnet, dass** jeder Bügel (12, 13) S-förmig ausgelegt ist.

8. Ventilsteuerungsgerät gemäß Anspruch 7, **dadurch gekennzeichnet, dass** jeder Bügel (12, 13) einen ersten Teilbereich (21) enthält, der bogenförmig ausgelegt ist, dass der Bogen über die äußere Stirnfläche des Spulenkörpers (1) tangential zur Längsachse des Spulenkörpers (1) hinausragt, dass der Bogen zum Spulenkörper (1) und zum anderen Federbügel (13, 12) leicht hingebogen ist, dass der Bogen mit dem Steckerstifteträger (11) durch einen U-förmigen zweiten Teilbereich (22) verbunden ist, wobei ein kürzerer Arm des zweiten Teilbereichs (22) mit dem ersten Teilbereich (21) und ein längerer Arm mit dem Steckerstifteträger (11) verbunden ist.

9. Ventilsteuerungsgerät gemäß irgend einem der Ansprüche 5 bis 8, **dadurch gekennzeichnet, dass** die Federbügel (12, 13) zueinander spiegelverkehrt angeordnet sind.

10. Ventilsteuerungsgerät gemäß irgend einem der Ansprüche 5 bis 9, **dadurch gekennzeichnet, dass** die Federbügel (12, 13) aus einem Teil zusammen mit dem Spulenkörper (1) hergestellt werden und dass der Spulenkörper einen teilringförmigen Rand (14) enthält, welcher an der dem Steckerstifteträger (11) gegenüberliegenden Seite angeordnet ist, dass der teilringförmige Rand (14) eine obere Stirnseite zur Aufnahme der Deckplatte (8) enthält, dass die obere Stirnseite des teilringförmigen Randes (14) in einer höher gelegenen Ebene angeordnet ist als eine obere Stirnseite der ersten und zweiten Bügel (12, 13).

11. Ventilssteuerungsgerät gemäß irgend einem der Ansprüche 5 bis 10, **dadurch gekennzeichnet, dass** die Federbügel (12, 13) parallel zur Längsachse der Spule angeordnet sind, dass die Höhe größer ist als die Dicke bzw. der Durchmesser der Bügel (12, 13) in senkrechter Richtung zur Längsachse der Spule (3).

## Revendications

1. Dispositif de commande de soupape destiné à assurer la commande d'une soupape pour un fluide sous pression, comprenant:
une bobine cylindrique comportant un axe longitudinal,
un corps de bobine, sur lequel est agencée la bobine,
le corps de la bobine comprenant un trou central agencé le long de l'axe longitudinal de la bobine,
un boîtier avec un manchon de culasse externe, une partie inférieure d'un anneau de culasse et un manchon de culasse interne,
le manchon de culasse externe entourant la bobine,
le manchon de culasse interne étant agencé dans le trou et la partie inférieure de l'anneau de culasse connectant les manchons de culasse interne et externe,
**caractérisé en ce que**
un deuxième manchon (7) est agencé dans le manchon de culasse interne (18) et fixé sur le manchon de culasse interne (18), le manchon de culasse interne (18) étant formé par un processus d'emboutissage profond.

2. Dispositif de commande de soupape selon la revendication 1, **caractérisé en ce que** le deuxième manchon (7) est produit par un processus d'emboutissage profond.

3. Dispositif de commande de soupape selon les revendications 1 ou 2, **caractérisé en ce que** le boîtier (5) comprend une plaque de couverture (8), et un manchon supérieur (9) opposé à la partie inférieure de l'anneau de culasse (17), le manchon supérieur (9) étant agencé dans le trou (26) du corps de la bobine (1),
un manchon additionnel (10) étant agencé dans le manchon supérieur (9) et fixé sur le manchon supérieur (9), la plaque de couverture (8) et le manchon supérieur (9) étant produits par un processus d'emboutissage profond.

4. Dispositif de commande de soupape selon la revendication 3, **caractérisé en ce que** le manchon additionnel (10) est produit par un processus d'emboutissage profond.

5. Dispositif de commande de soupape selon la revendication 1, comprenant:
un support de broches à bornes (11),
des broches à bornes de la bobine fixées sur ledit support de broches et connectées par conductivité à la bobine (3),
le support de broches à bornes (11) étant connecté par un élément de ressort (12, 13) au corps de la bobine (1), l'élément de ressort (12, 13) étant agencé perpendiculairement à l'axe longitudinal de la bobine (3),
le boîtier (5) comprenant des entailles (20) à travers lesquelles s'étend l'élément de ressort (12, 13), le support de broches à bornes (11) étant au moins en partie agencé à côté du boîtier (5).

6. Dispositif de commande de soupape selon la revendication 5, **caractérisé en ce que** l'élément de ressort (12, 13) comprend deux bras (12, 13), les deux bras (12, 13) étant agencés sur le même plan, des premières extrémités des deux bras (12, 13) étant fixées sur les côtés opposés du corps de la bobine (1),
des deuxièmes extrémités des deux bras (12, 13) étant fixées sur les côtés opposés du support de broches à bornes (11).

7. Dispositif de commande de soupape selon la revendication 6, **caractérisé en ce que** chaque bras (12, 13) a une forme en S.

8. Dispositif de commande de soupape selon la revendication 7, **caractérisé en ce que** chaque bras (12, 13) comprend une première partie (21) ayant une forme en arc, l'arc émergeant de la face externe du corps de la bobine (1), de manière tangentielle à l'axe longitudinal du corps de la bobine (1), l'arc étant légèrement fléchi vers le corps de la bobine (1) et l'autre bras du ressort (13, 12), l'arc étant connecté au support de broches à bornes (1) par une deuxième partie en U (22), une branche plus courte de la deuxième partie (22) étant connectée à la première partie (21) et une branche plus longue étant connectée au support de broches à bornes (11).

9. Dispositif de commande de soupape selon l'une quelconque des revendications 5 à 8, **caractérisé en ce que** les bras de ressort (12, 13) ont un agencement symétrique inversé l'un par rapport à l'autre.

10. Dispositif de commande de soupape selon l'une quelconque des revendications 5 à 9, **caractérisé en ce que** les bras de ressort (12, 13) sont formés d'une seule pièce avec le corps de la bobine (1), le corps de la bobine comprenant une bordure semi-circulaire (14) agencée en un point opposé au support de broches à bornes (11), la bordure semi-circulaire (14) comprenant ainsi une face supérieure destinée à supporter la plaque de couverture (8), la face supérieure de la bordure semi-circulaire (14) étant agencée à un niveau plus élevé qu'une face supérieure des premier et deuxième bras (12, 13).

11. Dispositif de commande de soupape selon l'une quelconque des revendications 5 à 10, **caractérisé en ce que** les bras de ressort (12, 13) sont agencés parallèlement à l'axe longitudinal de la bobine, la hauteur étant supérieure à une épaisseur des bras (12, 13) ayant une orientation perpendiculaire à l'axe longitudinal de la bobine (3).
